(19) Europäisches Patentamt
European Patent Office
Office européen des brevets

(11) **EP 2 469 299 B1**

(12) **FASCICULE DE BREVET EUROPEEN**

(45) Date de publication et mention
de la délivrance du brevet:
**21.01.2015 Bulletin 2015/04**

(51) Int Cl.:
*G01S 13/90* (2006.01)     *G06T 5/50* (2006.01)
*G06T 7/00* (2006.01)

(21) Numéro de dépôt: **11192115.1**

(22) Date de dépôt: **06.12.2011**

(54) **Procédé d'amélioration d'images acquises au moyen d'un radar à ouverture synthétique**

Verfahren zur Verbesserung der mit Hilfe eines Radars mit synthetischer Apertur erfassten Bilder

Method for enhancing images acquired by a radar with synthetic aperture

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.12.2010 FR 1005080**

(43) Date de publication de la demande:
**27.06.2012 Bulletin 2012/26**

(73) Titulaire: **Thales**
**92200 Neuilly Sur Seine (FR)**

(72) Inventeurs:
• **Lafaix, Julien**
**78150 Le Chesnay (FR)**
• **Sfez, Thierry**
**75012 Paris (FR)**
• **Lafolie, Stéphane**
**78851 Elancourt Cedex (FR)**
• **Bosser, Luc**
**78120 Rambouillet (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
• **ZHAO JIAN-HONG ET AL: "Impact of signal bandwidth on airborne wideband radar echoes", MICROWAVE AND MILLIMETER WAVE TECHNOLOGY, 2008. ICMMT 2008. INTERNATIONAL CONFERENCE ON, IEEE, PISCATAWAY, NJ, USA, 21 avril 2008 (2008-04-21), pages 1532-1535, XP031270810, ISBN: 978-1-4244-1879-4**
• **HUGHES P K: "A High-Resolution Radar Detection Strategy", IEEE TRANSACTIONS ON AEROSPACE AND ELECTRONIC SYSTEMS, IEEE SERVICE CENTER, PISCATAWAY, NJ, US, vol. AES-10, no. 5, 1 septembre 1983 (1983-09-01), pages 663-667, XP011167084, ISSN: 0018-9251**
• **ZHAO JIANHONG ET AL: "Signal-Clutter-Noise Power Ratio of Airborne Wideband Radar", 5TH INTERNATIONAL CONFERENCE ON COMMUNICATIONS, CIRCUITS AND SYSTEMS - 11-13 JULY 2007, KOKURA, JAPAN, IEEE, PISCATAWAY, NJ, USA, 11 juillet 2007 (2007-07-11), pages 1309-1312, XP031219688, ISBN: 978-1-4244-1473-4**
• **ROBERTSON R S ET AL: "A K alpha -band instrumentation radar with one foot range resolution", PROCEEDINGS OF THE NATIONAL RADAR CONFERENCE. LOS ANGELES, MAR. 12 - 13, 1991; [PROCEEDINGS OF THE NATIONAL RADAR CONFERENCE], NEW YORK, IEEE, US, vol. CONF. 5, 12 mars 1991 (1991-03-12), pages 1-5, XP010038681, DOI: DOI:10.1109/NRC. 1991.114713 ISBN: 978-0-87942-629-3**

• FARINA A ET AL: "DETECTION WITH HIGH RESOLUTION RADAR: GREAT PROMISE, BIG CHALLENGE", MICROWAVE JOURNAL, HORIZON HOUSE PUBLICATIONS, NORWOOD, MA, US, vol. 34, no. 5, 1 mai 1991 (1991-05-01), XP000235597, ISSN: 0192-6225

• MALAS J A ET AL: "Automatic target recognition of slow moving ground targets using stap", AEROSPACE CONFERENCE, 2003. PROCEEDINGS. 2003 IEEE MARCH 8-15, 2003, PISCATAWAY, NJ, USA,IEEE, vol. 4, 8 mars 2003 (2003-03-08), pages 4_2021-4_2036, XP010660498, ISBN: 978-0-7803-7651-9

**Description**

La présente invention concerne un procédé d'amélioration d'images acquises au moyen d'un radar à ouverture synthétique ou SAR pour " Synthetic Aperture Radar " selon la dénomination anglo-saxonne.

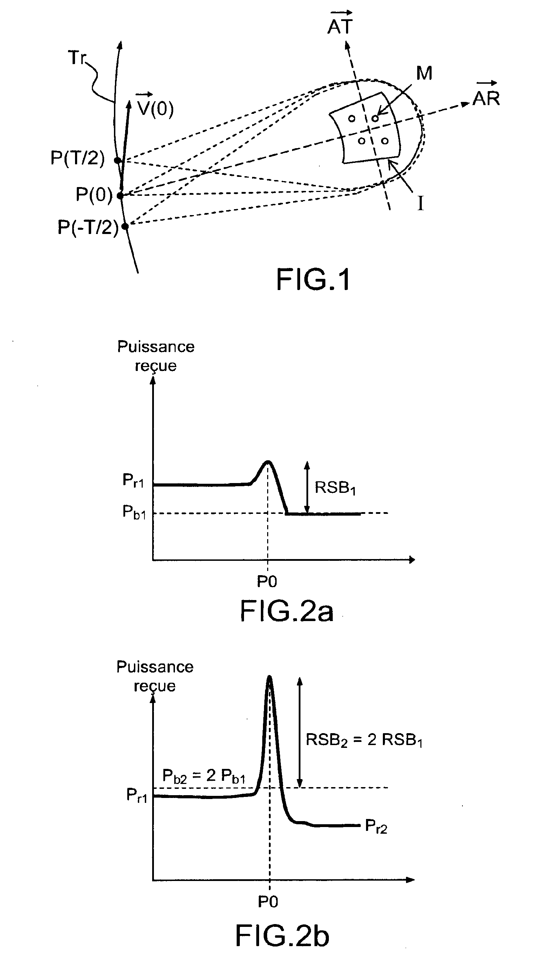

Comme visible sur la figure 1, l'imagerie SAR consiste à imager une zone imagée I depuis un porteur P aéroporté (avion, drone, satellite) par émission d'une onde radar représentée en traits pointillés avec une longueur d'onde $\lambda$. Les réflecteurs situés dans la zone à imager réfléchissent le faisceau radar. Les ondes émises par les réflecteurs sont captées par un récepteur. Le mouvement du porteur P au cours du temps, selon une trajectoire Tr, permet de recréer une antenne synthétique de grande dimension ou SAR ce qui conduit à l'obtention d'images très résolues.

Le traitement SAR consiste à combiner les informations acquises par les récepteurs pendant l'ensemble de l'éclairement pour obtenir l'image. Un mode SAR délivre, pour chaque réflecteur $M$ situé à l'intérieur de la zone à imager I éclairée par le faisceau pendant une durée Te :

- une information de distance D du réflecteur M par rapport au porteur P : $D = \|\overrightarrow{PM}\|$,

- une information de Doppler correspondant à une fréquence $f_M$

$$f_M = \frac{2}{\lambda} \vec{V} . \frac{\overrightarrow{PM}}{D}$$

Où $\vec{v}$ est le vecteur vitesse du porteur et $\lambda$, est la longueur d'onde émise par le radar.

Les informations provenant de la centrale inertielle du porteur permettent ensuite de mettre en conformité l'image SAR, c'est-à-dire de projeter cette image au sol.

En première approximation, la résolution sur l'un quelconque des deux axes peut être vu comme la taille minimale que doit avoir un objet pour que l'on puisse le distinguer sur l'image.

La résolution transverse $\delta_t$ suivant l'axe transverse est conditionnée par la précision avec laquelle le mode SAR délivre l'information de Doppler.

Cette résolution transverse $\delta_t$ est inversement proportionnelle au temps d'éclairement Te :

$$\delta_t = \frac{k_{pond} . \lambda . D}{2 . V . \sin(\theta) . Te} \qquad \text{Équation 1}$$

La résolution radiale $\delta_r$, est quant à elle inversement proportionnelle à la largeur B de la bande de fréquences émise par le radar comme cela est décrit dans la première section du document : Zhao Jian-Hong et Al «Impact of signal bandwith on airborne wideband radar echoes » Microwave and millimeter wave technology, 2008. Notons que dans la présente demande de brevet, par bande, on entend la largeur, en fréquence, de la bande de l'onde émise par le radar.

La longueur d'onde $\lambda$ est donnée par $\lambda = c / f$, où c la vitesse de la lumière et f est la fréquence centrale sur laquelle est centrée la bande de fréquences de l'onde émise par le radar.

$$\delta_r = \frac{c}{2 . B} \qquad \text{Équation 2}$$

On introduit ensuite la notion de rapport signal à bruit RSB, c'est-à-dire la différence de niveau entre le signal renvoyé par le sol et le bruit présent sur la chaîne de réception du radar. La principale source de bruit du récepteur est le bruit thermique Bth créé par l'agitation thermique dans les composants électroniques.

La puissance du bruit thermique $P_b$, pour une largeur de bande B, s'écrit :

$$P_b = K_B . T . B . F \qquad \text{Équation 3}$$

La puissance $P_R$ du signal reçu par le récepteur est :

$$P_R = \frac{k_{pond} P_m G_e G_r \lambda^3 B}{2(4\pi)^3 D^3 L V \sin(\theta)} \frac{s_{eq}}{\delta_t} \qquad \text{Équation 4}$$

Le rapport signal à bruit RSB du radar s'en déduit :

$$RSB = \frac{k_{pond} P_m G_e G_r \lambda^3}{2(4\pi)^3 D^3 L V \sin(\theta) K_B TF} \frac{s_{eq}}{\delta_t} \qquad \text{Équation 5}$$

Le terme $S_{eq}$ est la surface équivalente radar de l'objet visé. Cette surface est indépendante de la résolution pour un réflecteur ponctuel. Par réflecteur ponctuel, on entend un réflecteur duquel toutes les ondes sont réfléchies comme provenant d'un seul point, comme, par exemple, un trièdre). Par extension, des zones comme des bâtiments ou des véhicules présentent de nombreux effets dièdres : ils apparaissent sur l'image comme un groupe de ponctuels. Cela montre qu'en affinant la résolution transverse $\delta_t$ (et donc en augmentant le temps d'éclairement) le rapport signal à bruit RSB augmente pour un ponctuel.

La surface équivalente radar s'écrit $S_{eq} = \sigma_0 \delta_t \delta_r$ sur toute zone considérée comme uniforme de l'image, où $\sigma_0$ est le coefficient de rétrodiffusion moyen par unité de surface d'un terrain considéré à l'incidence considérée.

Dans ce cas, l'équation 5 montre que le rapport signal à bruit RSB est proportionnel à la résolution radiale ou encore inversement proportionnel à la largeur de la bande émise B (voir équation 2) : le rapport signal sur bruit RSB diminue sur une zone homogène lorsque la résolution radiale $\delta_r$ s'affine (c'est-à-dire lorsque $\delta_r$ diminue).

Cette double propriété nous sera particulièrement utile dans la suite de la demande de brevet.

L'équation 5 peut être inversée pour déduire une distance de portée Dp d'un mode SAR. En effet, si on définit la distance de portée, ou portée, comme la distance à partir de laquelle il n'est plus possible de différencier un type de terrain prédéterminé du bruit, cela revient à chercher un rapport signal à bruit RSB supérieur à 1 pour ce type de terrain. En général, la portée du radar est déterminée pour voir le sol, c'est-à-dire le fond, le plus majoritairement présent sur l'image (herbe, sable ou rochers, etc, selon la localisation du porteur). Sachant que pour un type de terrain prédéterminé, le coefficient de rétrodiffusion de référence $\sigma_0$ est tabulé en fonction de l'incidence, il suffit de l'introduire dans l'équation ci-dessus pour obtenir la portée d'un radar donné en fonction d'une résolution radiale visée $\delta_r$. Par habitude, on essaie aussi faire que possible d'avoir des résolutions radiales et transverses de taille sensiblement équivalentes. Dans la suite du texte, on considérera que les résolutions radiale et transverse ont des tailles équivalentes, et on appellera résolution la valeur des deux résolutions.

Tant que la distance D est inférieure à la distance de portée Dp, il est possible de distinguer le terrain prédéterminé du bruit.

$$D^3 < \frac{k_{pond} P_m G_e G_r \lambda^3 \sigma_0 \delta_r}{2(4\pi)^3 L V \sin(\theta) K_B TF} = Dp^3 \qquad \text{Équation 6}$$

La puissance $P_m$ émise par le radar est en général contrainte par les capacités du matériel, le niveau de bruit thermique est fixé par la résolution visée et les performances de la chaîne de réception radar.

Pour une distance D donnée, il est donc possible de déterminer théoriquement la qualité de l'image obtenue. Le traitement d'image nécessitant également une qualité prédéterminée de l'image, la limite de portée du radar est ainsi fixée.

La signification des notations utilisées précédemment et ultérieurement est donnée dans le tableau ci-dessous.

| B | Largeur de la Bande émise |
|---|---|
| Bth | Bruit thermique |

(suite)

| C | Vitesse de la lumière |
|---|---|
| D | Distance |
| Dp | Distance de portée |
| F | Facteur de bruit du récepteur |
| $G_e$ | Gain de la chaîne d'émission |
| $G_r$ | Gain de la chaîne de réception |
| $K_B$ | Constante de Boltzmann |
| $k_{pond}$ | Facteur de pondération |
| L | Pertes atmosphériques |
| $P_b$ | Puissance de bruit thermique |
| $P_m$ | Puissance moyenne émise |
| $P_r$ | Puissance du signal reçu par le récepteur |
| RSB | Rapport signal à bruit |
| T | Température |
| Te | Temps d'éclairement ou durée d'acquisition |
| V | Vitesse du porteur |
| $\delta_r$ | Résolution Distance (Résolution radiale) |
| $\delta_t$ | Résolution Doppler (Résolution transverse) |
| $\lambda$ | Longueur d'onde |
| $\sigma$ | Coefficient de rétrodiffusion |
| $\theta$ | Angle de gisement |
| f | Fréquence centrale sur laquelle la bande émise par le radar. |

Lorsqu'on acquière une image d'une zone à imager située à une distance D supérieure à la distance de portée du radar Dp, on dit que l'on acquière une image SAR en dehors de la portée du radar. Dans ce cas, le rapport signal sur bruit RSB correspondant au fond de l'image, par exemple le sol, est supérieur à 1. Par conséquent, seuls les ponctuels ou les groupes de ponctuels demeurent visibles sur l'image au-dessus d'un bruit de fond. Le sol n'est plus distinguable sur l'image, la puissance du signal renvoyée depuis le fond de l'image étant inférieure au bruit thermique Bth. L'image SAR acquise en dehors de la portée du radar n'est pas exploitable, seuls quelques points étant visibles sans aucun contexte. Autrement dit, l'image SAR acquise en dehors de la portée du radar est dégradée par rapport à une qualité d'image prédéterminée, présentant une résolution prédéterminée.

Actuellement, soit on accepte la dégradation de l'image, soit on souhaite obtenir une image de qualité prédéterminée auquel cas, il n'est jamais question d'exploiter des images SAR dont la puissance rétrodiffusée par le fond est inférieure à la puissance du bruit thermique. Il est plutôt question d'augmenter la puissance du radar ou de se rapprocher de la scène à observer.

La demanderesse adresse dans cette demande de brevet, un tout nouveau problème. Ce problème consiste à améliorer, de façon à pouvoir les exploiter, la qualité d'images SAR acquises au-delà de la portée du radar pour le fond de la scène à observer (sol, forêt, terre, mer) dans lesquelles la puissance rétrodiffusée par le fond de la scène à observer est inférieure à la puissance du bruit thermique.

La demanderesse souhaite en effet pouvoir profiter des nombreux avantages liés à l'acquisition d'images SAR acquises au-delà de la portée du radar.

On peut d'ores et déjà citer la réduction de la puissance émise par le radar présentant l'intérêt de permettre au porteur muni du radar SAR de ne pas se faire repérer (furtivité).

A cet effet, l'invention a pour objet un procédé d'amélioration d'une image acquise au moyen d'au moins un radar à ouverture synthétique comprenant :

- une première étape d'acquisition d'une première image SAR d'une scène à imager, au moyen d'un premier radar SAR, avec une première résolution et des premières conditions opérationnelles d'acquisition telles que le fond de la scène à imager ne se distingue pas du bruit thermique sur la première image SAR,
- une deuxième étape d'acquisition, d'une deuxième image SAR de ladite scène à imager, au moyen d'un deuxième radar SAR, dans des deuxièmes conditions opérationnelles d'acquisition sensiblement identiques aux premières conditions opérationnelles d'acquisition et avec une deuxième résolution plus grossière que la première résolution, de façon que le fond de la scène se distingue du bruit thermique sur la deuxième image SAR,
- une première étape de fusion de la première image SAR et d'une image faisant office de fond de carte et étant recalée avec la deuxième image SAR de façon à obtenir une image hybride.

Avantageusement, le procédé comprend une première étape de recalage de la première image SAR avec la deuxième image SAR.

Dans un premier mode de réalisation, l'image faisant office de fond de carte est la deuxième image SAR.

Avantageusement, le procédé comprend une deuxième étape de recalage d'une image externe distincte d'une image SAR avec la première image hybride et une deuxième étape de fusion de l'image hybride avec l'image externe.

Avantageusement, l'image externe est une image optique ou une carte topographique ou une image infrarouge ou une image optronique.

Avantageusement, la deuxième étape de recalage est une étape de recalage iconique.

Dans un deuxième mode de réalisation, l'image faisant office de fond de carte est une image externe distincte d'une image SAR, ledit procédé comprenant, préalablement à la première étape de fusion, une troisième étape de recalage de l'image externe avec la deuxième image SAR.

Avantageusement, la troisième étape de recalage est une étape de recalage iconique.

Avantageusement, l'image externe est une image optique ou une carte topographique ou une image infrarouge ou une image optronique.

Avantageusement, la première étape de recalage est une étape de recalage géométrique.

Avantageusement, la deuxième image SAR est la somme en amplitude de plusieurs images SAR élémentaires acquises successivement.

Avantageusement, la première image SAR et la deuxième image SAR sont acquises simultanément ou successivement.

Avantageusement, la première image SAR et la deuxième image SAR sont acquises consécutivement.

Avantageusement, les acquisitions de la première image SAR et de la deuxième image SAR sont espacées d'un intervalle de temps supérieur à une heure.

Avantageusement, le deuxième radar est le premier radar.

Selon une caractéristique, la première image SAR et la deuxième image SAR sont acquises par émission autour d'une première fréquence centrale d'émission et, respectivement, autour d'une deuxième fréquence centrale d'émission identique à la première fréquence centrale d'émission, par exemple, dans la bande X.

Selon une autre caractéristique, la première image SAR et la deuxième image SAR sont acquises par émission autour de deux fréquences centrales différentes. Par exemple, la première image SAR est acquise au moyen d'une onde radar présentant une première fréquence centrale d'émission comprise dans la bande Ku et la deuxième image SAR est acquise au moyen d'une onde radar présentant une deuxième fréquence centrale d'émission comprise dans la bande X.

Le procédé selon l'invention permet, en reconstituant un fond de carte, d'améliorer de premières images SAR acquises en dehors de la portée du radar qui les a générées de sorte que l'exploitation de ces images devient possible. Autrement dit, le procédé selon l'invention permet d'augmenter le rapport signal sur bruit du fond de la première image. Il permet d'obtenir une image exploitable à partir d'une image présentant des points brillants très bien résolus et un fond bruité. L'image obtenue allie les qualités de deux images : les qualités d'une image présentant un fond de carte non bruité et la bonne résolution souhaitée des ponctuels ( ou groupes de ponctuels) correspondant à la résolution de la première image dont le fond est bruité.

Ceci permet d'améliorer la qualité visuelle de la première image SAR et, d'exploiter de façon plus efficace et plus aisée l'image de manière automatique ou manuelle.

Le procédé selon l'invention permet d'obtenir une image exploitable en utilisant, pour l'acquisition de la première image et de la deuxième image, une puissance trop faible pour obtenir, sur une même image, à la fois un fond de carte se distinguant du bruit et une résolution radiale suffisante pour les ponctuels. Cela permet de réduire la vulnérabilité du porteur équipé du (ou des) radars SAR (furtivité) et également de réduire la consommation d'énergie des radars. On peut donc utiliser des radars peu coûteux car peu puissants.

Ce procédé permet d'augmenter la portée du radar sans augmenter la puissance ni la consommation du radar. On peut en effet former une image exploitable à partir d'une image acquise en dehors de la portée du radar pour la puissance d'émission utilisée. Cela permet d'acquérir l'image d'une scène à une distance plus importante de cette scène que la distance de portée du radar pour la résolution souhaitée et la puissance utilisée. On répond ainsi au problème opérationnel de boucle courte contraignant à disposer de l'image au plus tôt.

L'utilisation, à des fins de recalage, d'une deuxième image SAR présentant une résolution plus grossière que la première image SAR à améliorer présente l'avantage de limiter la durée d'acquisition des deux images ainsi que la durée de traitement (deuxième image SAR peu résolue). Par ailleurs, elle permet de réaliser un recalage performant des deux images du fait de la similarité des conditions d'acquisition de ces deux images.

D'autres caractéristiques et avantages de l'invention apparaîtront à la lecture de la description détaillée qui suit, faite à titre d'exemple non limitatif et en référence aux dessins annexés dans lesquels :

- la figure 1 déjà décrite représente schématiquement une configuration de prise de vue par un radar SAR,
- les figures 2a et 2b représentent la puissance de signaux reçus par un récepteur et la puissance du bruit thermique, pour une image acquise dans la portée d'un radar SAR, et respectivement, pour une image acquise au-delà de la portée d'un radar SAR,
- la figure 3 représente schématiquement les étapes d'un procédé d'amélioration d'une image SAR selon un premier mode de réalisation de l'invention,

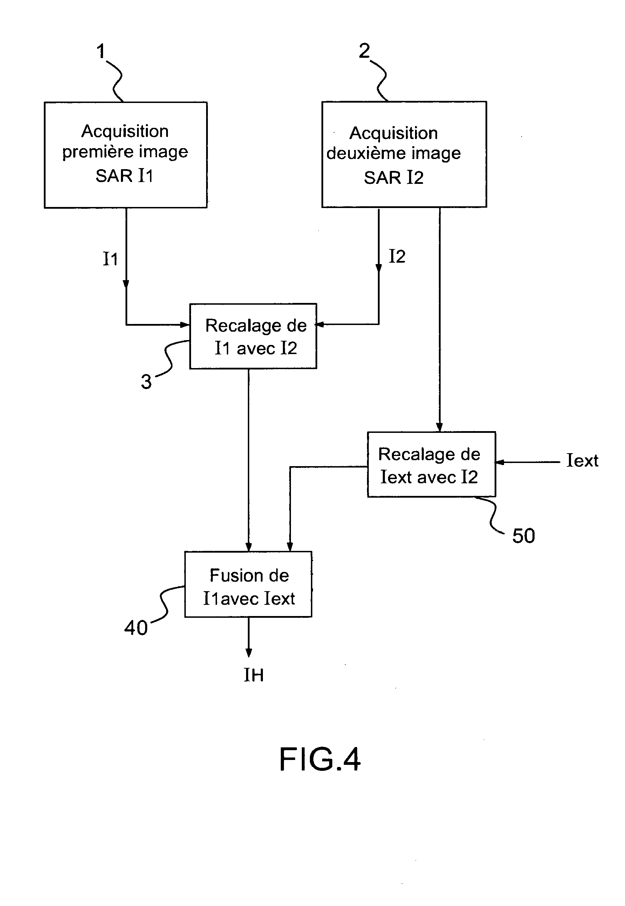

- la figure 4 représente schématiquement les étapes d'un procédé d'amélioration d'une image SAR selon un deuxième mode de réalisation de l'invention.

D'une figure à l'autre, les mêmes éléments sont repérés par les mêmes références.

L'invention concerne l'amélioration des images SAR acquises au-delà de la portée du radar pour le fond de la scène à observer, pour une résolution (radiale et transverse) prédéterminée. Autrement dit, on améliore une image dans laquelle le rapport signal sur bruit RSB du fond de la scène est inférieur à 1.

Cela revient à acquérir des images SAR à une distance D supérieure à la distance de portée Dp du radar, à diminuer la puissance $P_m$ émise par radar ou à augmenter la résolution de l'image en augmentant la largeur de la bande émise B et en augmentant le temps d'éclairement Te par rapport à des conditions prédéterminées d'acquisition de l'image permettant de distinguer le sol (rapport signal sur bruit supérieur à 1 pour un coefficient de rétrodiffusion d'un sol prédéterminé $\sigma_0$). (voir équations 1, 2 et 5).

On se propose d'introduire le problème à l'aide des figures 2a et 2b qui représentent les puissances reçues par le récepteur depuis une coupe d'une scène comprenant un ponctuel PO central situé à côté, d'une part d'herbe (à gauche du ponctuel) et de l'autre de béton (à droite du ponctuel). On a représenté en traits pleins, les puissances $P_{r1}$ et $P_{r2}$ des signaux reçus par le récepteur, en traits pointillés, le niveau du bruit thermique $P_{b1}$ et $P_{b2}$ et, par des flèches, les rapports signal sur bruit $RSB_1$ et $RSB_2$ dans les conditions d'acquisition des deux images.

Les images représentées sur les figures 2a et 2b sont réalisées avec deux résolutions différentes mais avec une puissance moyenne émise $P_m$ identique :

- Figure 2a, bande émise = B1, temps d'éclairement = Te1,
- Figure 2b, bande émise = 2B1, temps d'éclairement = 2Te1.

L'image représentée sur la figure 2b est donc deux fois plus résolue que l'image représentée sur la figure 2a (voir équation 1 et équation 2).

En accord avec l'équation 3 et l'équation 5, la figure 2a présente un niveau de bruit thermique $P_{b1}$ deux fois moindre que celui $P_{b2}$ de la figure 2b (effet de la réduction de la bande émise), tandis que le rapport signal à bruit sur le ponctuel $RSB_2$ est deux fois plus élevé sur la figure 2b que sur la figure 2a ($RSB_1$). Le niveau de puissance du sol reste quasiment constant entre les deux figures (du fait de la variation de la largeur de la bande émise et de la durée d'acquisition dans le même sens) (voir équations 1 et 4).

En effet, le comportement d'une zone homogène sur les deux axes Distance et Doppler peut être approché de la manière suivante :

- axe Doppler (axe transverse): pour un éclairement n fois plus long, le niveau moyen renvoyé par la zone homogène (par exemple, le sol) est n fois plus élevé. En parallèle, le niveau du bruit est également n fois plus élevé,
- axe Distance (axe radial) : pour un éclairement avec n fois plus de bande, le niveau moyen renvoyé la zone homogène (par exemple, le sol) demeure constant (l'énergie renvoyée par unité de surface est indépendante de la résolution). A contrario, le bruit augmente d'un rapport n puisque l'ouverture du récepteur est augmentée d'un facteur n. Le rapport signal à bruit est donc divisé par n.

Concrètement, on peut dégager deux zones sur la figure 2a tandis qu'un seul niveau est visible sur la figure 2b bien que le ponctuel (dont la puissance a la forme d'un pic) soit plus résolu et se dégage plus nettement du bruit. Autrement dit, seuls les points très brillants (bâtiments, véhicules) sont visibles sur l'image dont la puissance est représentée sur la figure 2b, le reste de l'image est du bruit, autrement dit, le fond de la scène ne se distingue pas du bruit thermique sur la figure 2b.

Le problème nouveau que se propose de résoudre la demanderesse est donc de récupérer des informations sur le fond de la scène lorsque les conditions d'acquisition du signal nous placent dans la configuration de la figure 2b. Autrement dit, on cherche à allier les qualités des images 2a et 2b.

Le procédé selon l'invention permet d'allier les qualités de ces deux images. Il consiste à améliorer la qualité d'une première image SAR acquise au-delà de la portée du radar en ajoutant de l'information disponible sur une autre image faisant office de fond de carte. On parle de fusion.

Nous verrons par la suite que l'autre image peut être une image SAR ou bien une image externe obtenue par des moyens autre qu'un radar SAR, pouvant, de façon non limitative, être une image optique, une carte topographique, une image infrarouge ou une image optronique.

Pour cela, deux étapes distinctes sont nécessaires : une première étape de recalage de la première image SAR avec une autre image et une étape de fusion de la première image SAR avec troisième image recalée, c'est-à-dire alignée avec l'autre image. Or, la puissance émise étant faible, seuls les ponctuels ou groupes de ponctuels de la première image se détachent du bruit, ce qui empêche de réaliser le recalage.

En effet, le recalage est le fait d'aligner la première image SAR avec une autre image. Par alignement, on entend la mise en correspondance des pixels des deux images. Deux images sont dites alignées lorsqu'elles sont directement superposables : le même pixel de chaque image correspond à un point identique au sol.

Lorsque deux images sont alignées, on dit que les images sont identiquement géo-référencées de telle sorte qu'elles soient superposables.

La localisation géographique d'une image est assurée par les mesures du radar et les informations délivrées par la centrale inertielle de l'avion. Or, ces informations sont entachées d'une erreur qui introduit une erreur de localisation. Celle-ci doit être corrigée préalablement afin d'associer les pixels des deux images. Pour le recalage, deux approches s'affrontent :

- les méthodes dites iconiques basées sur l'intensité des pixels des images,
- les méthodes dites géométriques basées sur les structures de l'image (les contours par exemple).

Sur une première image SAR acquise au-delà de la portée du radar, seuls les ponctuels ou groupes de ponctuels forts de l'image se détachent du bruit, il apparaîtrait naturel de se diriger vers une méthode géométrique. Cependant, la solution vise à fusionner la première image SAR avec n'importe quelle autre image quelle que soit la modalité d'acquisition retenue pour cette dernière.

Les structures de la première image SAR ne se retrouvent alors pas obligatoirement sur l'autre image. Ceci peut conduire à un recalage moins précis voire à une erreur de recalage. Même dans le cas où l'image faisant office de fond de carte est également une image SAR, si la configuration de prise de vue est différente, et particulièrement si la direction de l'éclairement varie, les forts échos réflecteurs ne sont pas les mêmes et le recalage échoue. En effet, un des problèmes majeurs pour le recalage des images SAR est la réponse variable des objets selon l'orientation de l'éclairement radar. On préférerait donc une approche iconique. Celle-ci prend en compte l'ensemble des points de l'image via leur intensité. Mais comme la première image SAR ne présente que les points brillants et du bruit, ce type de méthode n'est pas non plus performant.

L'idée est donc d'acquérir et d'utiliser une seconde image SAR moins résolue (c'est-à-dire présentant une résolution radiale et une résolution transverse plus grossières que celles de la première image SAR) mais dont le niveau de bruit est plus faible. La deuxième image SAR présente un fond de carte non bruité qui permet d'assurer le recalage avec la première image SAR ainsi qu'avec l'éventuelle l'image externe nécessaire à l'étape de fusion.

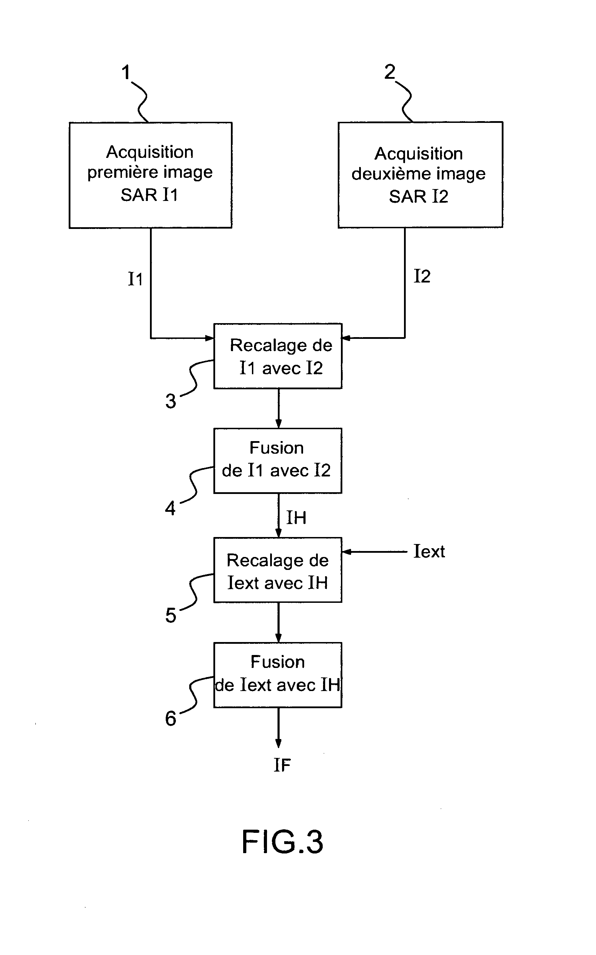

Sur la figure 3, on a représenté un procédé selon un premier mode de réalisation de l'invention.

Ce procédé comprend :

- une première étape d'acquisition 1, d'une première image SAR I1 d'une scène à imager, au moyen d'un premier radar SAR, avec une première résolution $\delta_1$ (correspondant à une première résolution radiale $\delta_1$ et à une première résolution transverse $\delta_{t1}$) et des premières conditions opérationnelles d'acquisition telles que le fond de la scène à imager ne se distingue pas du bruit thermique sur la première image SAR I1,
- une deuxième étape d'acquisition 2, d'une deuxième image SAR I2 de ladite scène à imager, au moyen d'un deuxième radar SAR, dans des deuxièmes conditions opérationnelles d'acquisition sensiblement identiques aux premières conditions opérationnelles d'acquisition et avec une deuxième résolution $\delta_2$ (correspondant à une deuxième résolution radiale $\delta_2$ et à une deuxième résolution transverse $\delta_{t2}$) plus grossière que la première résolution, de façon que le fond de la deuxième image I2 se distingue du bruit thermique sur la deuxième image SAR I2,
- une première étape de recalage 3 de la première image SAR avec la deuxième image SAR,
- une première étape de fusion 4 de la première image SAR I1 et d'une image faisant office de fond de carte recalée avec la deuxième image SAR I2 de façon à obtenir une image hybride IH.

En résumé, la première étape d'acquisition de la première image SAR I1 est réalisée en dehors du domaine de portée du premier radar, alors que l'acquisition de la deuxième image SAR est réalisée dans le domaine de portée du deuxième radar.

La première résolution est prédéterminée en fonction de la résolution que l'on souhaite obtenir pour les ponctuels.

Par image faisant office de fond de carte, on entend une image qui permet de replacer un contexte et donc de situer l'image dans l'espace. Il s'agit d'une image sur laquelle les informations relatives au fond de l'image sont non bruitées ou se distinguent du bruit.

Le fond de la scène à visualiser correspond à un type de terrain prédéterminé, comme, par exemple, de l'herbe, du sable, le béton, etc ..., pour lesquels des coefficients de rétrodiffusion respectifs sont déterminés.

Par des conditions opérationnelles d'acquisition sensiblement identiques, on entend que les deux images SAR sont acquises au moyen d'un même radar SAR ou de deux radars SAR différents depuis deux positions géographiques pour lesquelles l'axe aéronef - sol et la trajectoire de l'aéronef sont sensiblement les mêmes (les deux radars peuvent être éloignés l'un de l'autre tant que l'axe de la prise de vue et la direction de vol soient les mêmes). Autrement dit, l'axe aéronef-sol doit différer de moins de 10°, entre les deux acquisitions, et les trajectoires de l'aéronef aux moments des deux acquisitions doivent différer de moins de 10°. Ces valeurs sont données à titre indicatif, elles dépendent de l'algorithme de recalage et du contenu de la scène imagée. Les conditions opérationnelles d'acquisitions des deux images sont avantageusement identiques.

Le fait de faire l'acquisition des deux images dans les mêmes opérationnelles permet, de s'assurer que les points brillants des deux images sont les mêmes, de minimiser la probabilité d'apparition de changements entre les deux images et, de rendre négligeables les effets de relief entre les deux images. Un recalage géométrique peut donc être efficacement mis en place entre les deux images SAR.

L'initialisation du recalage est avantageusement fournie par la centrale inertielle du porteur. Le modèle de la transformation liant les deux images peut se résumer à un vecteur de translation, une rotation et une homothétie sur chaque axe.

Toutefois les conditions d'acquisition des deux images changent. La deuxième image est acquise avec une deuxième résolution plus grossière que la résolution de la première image ($\delta_1$ inférieure à $\delta_2$).

On fait l'acquisition de la première image SAR I1 avec un premier rapport signal sur bruit RSB1 pour un terrain prédéterminé formant le fond de la scène inférieur ou égal à 1 et l'acquisition de la deuxième image SAR I2 avec un deuxième rapport signal sur bruit RSB2 pour le même terrain supérieur à 1. Comme la deuxième image SAR I2 est moins résolue (c'est-à-dire qu'elle présente une résolution moins fine) que la première image SAR I1, le niveau de bruit thermique est moindre.

Par conséquent, le fond de la première image SAR I1 ne se distingue pas du bruit et le fond de la deuxième image SAR I2 se distingue du bruit. Cela revient à se placer dans le cadre de l'exemple des figures 2a et 2b.

Cela signifie également que la deuxième résolution est choisie de façon qu'avec un radar placé à la distance D de la scène à imager, on se trouve, dans les conditions d'acquisition choisies, à une distance inférieure à une deuxième distance limite de portée Dp2 du deuxième radar pour l'acquisition du terrain considéré formant le fond de l'image sur la deuxième image SAR I2 alors qu'on se trouve au-delà d'une première distance limite de portée Dp1 définie pour le premier radar pour l'acquisition du terrain considéré formant le fond de l'image sur la première image SAR I1.

Autrement dit, on définit une première distance limite de portée Dp1 pour un type de terrain considéré formant le fond de l'image ayant un coefficient de rétrodiffusion $\sigma_0$ pour première résolution radiale $\delta_{r1}$ dans les premières conditions opérationnelles d'acquisition fixant les valeurs des paramètres suivants L, sin ($\theta$), D. La première limite de portée Dp1 est définie par l'équation suivante :

$$Dp1^3 = \frac{k_{pond}P_{m1}G_e G_r \lambda_1^{\,3}\sigma_0 \delta_{r1}}{2(4\pi)^3 LV \sin(\theta)K_B TF}$$

$\lambda_1$ est la longueur d'onde émise par le premier radar, elle est reliée à la première fréquence centrale d'émission f1 par l'équation $\lambda_1$ = c/f1

La distance D entre le radar et la scène observée est supérieure ou égale à la première distance limite Dlim1.

On définit également une deuxième distance limite de portée Dp2 pour le type de terrain considéré ayant un coefficient de rétrodiffusion $\sigma_0$ dans les mêmes conditions opérationnelles d'acquisition que pour la première image fixant les valeurs des paramètres suivants L, sin ($\theta$), D et avec la deuxième résolution $\delta_{r2}$.

Si on se place dans le cas non limitatif où les performances des chaînes d'émission et de réception des deux radars ainsi que la vitesse de l'aéronef et T et F sont identiques lors des deux acquisitions, la deuxième limite de portée Dp2 est :

$$Dp2^3 = \frac{k_{pond} P_{m2} G_e G_r \lambda_2{}^3 \sigma_0 \delta_{r2}}{2(4\pi)^3 LV \sin(\theta) K_B TF}$$

$\lambda_2$ est la longueur d'onde émise par le deuxième radar, elle est reliée à la deuxième fréquence centrale d'émission f2 par l'équation $\delta_2 = c / f2$.

Avantageusement, la deuxième puissance émise par le deuxième radar $P_{m2}$ est inférieure ou égale à la première puissance émise par le premier radar $P_{m1}$.

Par exemple, la première puissance émise par le premier radar $P_{m1}$ et la puissance émise par le deuxième radar $P_{m2}$ sont identiques.

La deuxième résolution $\delta_{r2}$ est choisie de telle sorte que la deuxième portée soit supérieure à la première portée et de telle sorte que la distance D soit inférieure à la deuxième limite de portée Dlim2.

Pour que la première résolution $\delta_{r1}$ soit plus fine que la deuxième résolution $\delta_{r2}$, la première durée d'acquisition Te1 de la première image est supérieure à la deuxième durée d'acquisition Te2 de la deuxième image et la largeur de la première bande de fréquences d'émission B1 de la première image est supérieure à la largeur de la deuxième bande d'émission B2 de la deuxième image.

La première image SAR et la deuxième image SAR sont, par exemple, acquises successivement dans n'importe quel ordre. Elles sont, par exemple, acquises avec le même radar.

Avantageusement, la première image SAR et la deuxième image SAR sont acquises consécutivement. Cela permet de s'assurer que les deux images sont réalisées dans des conditions opérationnelles d'acquisition sensiblement identiques.

En variante, les deux acquisitions sont espacées dans le temps. Elles sont, par exemple espacées d'un intervalle de temps supérieur à un seuil prédéterminé d'environ 1 heure. Les deux acquisitions peuvent, par exemple, être réalisées à une journée d'intervalle à condition de revenir dans les mêmes conditions opérationnelles d'acquisition pour réaliser l'acquisition de la seconde image. Cela permet de relâcher la contrainte opérationnelle, par exemple : l'acquisition de la deuxième image SAR (avec une faible résolution, dans le domaine de portée du radar) est réalisée une seule fois et on surveille une zone en réalisant régulièrement l'acquisition d'une première image SAR (avec une résolution plus importante mais en dehors du domaine de portée du radar).

Avantageusement, la première image SAR et la deuxième image SAR sont acquises avec une première fréquence centrale d'émission f1 et, respectivement, une deuxième fréquence centrale d'émission f2 identique à la première fréquence centrale f1 ou au moins comprise dans une même bande de fréquences, par exemple, la bande X s'étendant de 8 à 12 GHz. La deuxième durée d'acquisition Te2 est alors plus courte que la première durée d'acquisition Te1. Cette caractéristique permet de ne pas augmenter de manière significative, la durée d'acquisition totale du système d'acquisition.

En choisissant une deuxième durée d'acquisition Te2 plus courte que la première durée d'acquisition Te1, le procédé selon l'invention permet d'améliorer une image sans augmenter la durée d'acquisition totale de manière significative.

En variante, la première image SAR et la deuxième image SAR sont acquises simultanément. Cela est possible si on utilise deux radars différents pour l'acquisition des deux images SAR, avec des fréquences centrales d'émission identiques ou différentes, ou bien si on utilise un unique radar apte à émettre simultanément des ondes avec des fréquences centrales d'émission différentes. On obtient alors les mêmes conditions opérationnelles d'acquisition pour les deux images.

Cette variante présente l'avantage de permettre de réaliser l'acquisition de la deuxième image pendant l'acquisition de la première image ce qui n'entraîne aucun allongement de la durée d'acquisition.

Par ailleurs, dans ce cas la première étape de fusion entre la première image SAR et la deuxième image SAR n'est pas forcément nécessaire. En effet, les deux images sont acquises dans le même référentiel et présentent naturellement les mêmes erreurs de géo-localisation. On dit que ces deux images sont recalées ou alignées.

Dans le cas où les deux fréquences centrales d'émission f1, f2 sont différentes, la première fréquence centrale d'émission f1 est, par exemple, comprise dans la bande X et la deuxième fréquence centrale d'émission f2 est, par exemple, comprise dans la bande Ku (s'étendant de 12 à 18 GHz). La seule contrainte est d'avoir des comportements physiques des objets au sol relativement proches dans les deux bandes de fréquence utilisées pour s'assurer que les forts réflecteurs soient les mêmes.

En faisant l'acquisition de la première image I1 en bande Ku, on peut utiliser des durées d'acquisition très limitées, en effet, en augmentant la fréquence centrale d'émission, et d'après l'équation 1, on affine la résolution transverse. Autrement dit, on peut diminuer la durée d'acquisition de la première image et obtenir la même résolution transverse qu'en bande X. Par ailleurs, que l'on soit en bande X ou en bande Ku la largeur de la bande émise conditionne directement la résolution radiale, donc si on veut la même résolution, on émet la même largeur de bande.

Par ailleurs, on peut mettre à profit la différence entre la première durée d'acquisition Te1 et la deuxième durée d'acquisition Te2, pour réaliser une deuxième image SAR I2 multi-vues. Autrement dit, pendant la première durée d'acquisition Te1, on fait l'acquisition de la première image SAR mais on fait aussi, simultanément à l'acquisition de la première image, l'acquisition de plusieurs deuxièmes images SAR élémentaires successives, par exemple consécutives, avec la deuxième durée d'acquisition Te2 puis on somme en amplitude les images SAR élémentaires pour obtenir la deuxième image SAR I2. Cette caractéristique permet de lisser le bruit de la deuxième image SAR.

A l'issue de la première étape de recalage 3, on procède à une première étape de fusion 4 de la première image SAR I1 recalée avec la deuxième image SAR I2 avec une image faisant office de fond de carte recalée avec la deuxième image SAR I2 de façon à obtenir une image hybride IH. Cette dernière image faisant office de fond de carte et étant recalée avec la deuxième image SAR est, dans ce mode de réalisation, la deuxième image SAR I2 elle-même. L'image hybride obtenue par la fusion des deux images permet de retrouver l'ensemble des structures présentes dans chacune des deux images et ce, sans introduire d'artefacts qui pourraient gêner lors de l'interprétation. La deuxième image SAR est intrinsèquement alignée avec elle-même. Dans ce cas, il n'est pas nécessaire de mettre en oeuvre une étape de recalage pour obtenir cet alignement.

Cette étape permet d'obtenir une image hybride présentant un fond de carte issu de la deuxième image SAR I2 se distinguant du bruit thermique et présentant une résolution réduite ainsi que des ponctuels de résolution plus fine issus de la première image SAR I1. Ce mode de réalisation présente l'avantage d'être rapide à mettre en oeuvre.

Cette image hybride peut être l'image finale qui est transmise à l'utilisateur.

En variante, le procédé selon le premier mode de réalisation de l'invention comprend une deuxième étape de recalage 5 d'une image externe Iext avec l'image hybride IH suivie d'une deuxième étape de fusion 6 de l'image hybride IH avec l'image externe Iext recalée avec l'image hybride, de façon à obtenir une image finale IF. Avantageusement, ces deux dernières étapes 5, 6 sont mises en oeuvre lorsqu'une image extérieure Iext est disponible.

Le fond de l'image finale IF ainsi obtenue est porteur de nombreuses d'informations puisqu'il est alors issu des informations de la deuxième image SAR I2 et de l'image extérieure Iext qui sont de deux types différents.

Sur la figure 2, on a représenté les étapes du procédé selon un deuxième mode de réalisation de l'invention. Ce procédé comprend également les étapes 1, 2 d'acquisition de la première image SAR I1 et de la deuxième image SAR I2, ainsi qu'une première étape de recalage 3, avantageusement géométrique, de la première image SAR avec la deuxième image SAR I2 et une étape de fusion 40 de la première image SAR avec une image faisant office de fond de carte et étant recalée avec la deuxième image SAR I2. Ce deuxième mode de réalisation diffère du premier mode de réalisation en ce que l'image faisant office de fond de carte n'est pas la même puisqu'il s'agit d'une image extérieure Iext telle que décrite précédemment.

La première étape de fusion 40, est donc, dans ce mode de réalisation, précédée d'une troisième étape de recalage 50 de l'image externe Iext avec la deuxième image SAR I2 de façon à permettre la fusion de l'image externe Iext avec la première image SAR I1.

Dans ce mode de réalisation, la deuxième image SAR I2 est utilisée uniquement à des fins de recalage, pour le recalage de la première image SAR I1 et de l'image extérieure. C'est l'image extérieure qui apporte toutes les informations sur le fond de l'image. Ce mode de réalisation présente l'avantage d'être plus rapide que le premier mode de réalisation dans le cas où l'on réalise la fusion de l'image hybride avec l'image externe. Par ailleurs, ce deuxième mode de réalisation permet d'obtenir les qualités du fond de l'image externe Iext et la résolution des ponctuels de la première image SAR I1.

Le choix entre les deux modes de réalisation peut, par exemple, se faire en fonction de la résolution de l'image externe. On privilégiera, par exemple, le deuxième mode de réalisation pour une image externe présentant une résolution proche de la résolution de la première image I1 et le premier mode de réalisation si la résolution de l'image externe est plus grossière.

Les deuxième et troisième étapes de recalage 5, 50 de l'image externe avec l'image hybride ou avec la deuxième image SAR I2 sont avantageusement réalisées via une méthode iconique telle que la méthode de l'information mutuelle normalisée NMI (de l'expression anglaise "Normalized Mutual Information"). C'est une mesure de similarité permettant de mesurer à quel point deux images se ressemblent. Dans une optique de recalage, il suffit de maximiser cette mesure pour aligner les deux images. La méthode de l'information mutuelle normalisée est bien connue de l'homme du métier et ne sera pas décrite dans la présente de demande de brevet.

En variante, il est possible d'utiliser toute autre méthode de recalage local. En effet, le recalage se doit d'être réalisé de manière locale afin de prendre en compte d'éventuels effets de relief et corriger les erreurs commises sur les résolutions des deux images.

Les différentes étapes de fusion de deux images précitées peuvent être réalisées en faisant une combinaison linéaire des deux images.

Une simple somme de la première image SAR I1 et de la deuxième image SAR I2 permet d'obtenir une bonne représentation du fond de l'image (provenant de la deuxième image I2) et une représentation des ponctuels avec la résolution de la première image I1. Cependant, cette simplicité génère de sérieux désavantages : le contraste des structures qui ne sont présentes que sur une seule des deux images est dégradé.

On utilise donc, de préférence, une méthode de fusion multi-échelles basée sur une transformation multi-échelles MST (de l'anglais "Multi-Scale Transform") des deux images. Ces méthodes permettent de conduire à un résultat de meilleure qualité qu'une simple somme des deux images en s'affranchissant du problème précédemment évoqué. Ce type de méthode est également plus robuste au bruit présent dans les images.

On utilise, par exemple, une méthode de fusion multi-échelles basée sur une décomposition en ondelettes complexes des deux images. De nombreuses méthodes de ce type sont décrites dans la littérature.

On donne ci-après deux exemples d'acquisition de la première image SAR I1 et de la deuxième image SAR I2. Dans le premier exemple, les deux acquisitions sont réalisées séquentiellement dans la même bande de fréquences, et dans le second exemple, les deux acquisitions sont réalisées simultanées dans des bandes de fréquence différentes.

Premier exemple :

Les deux acquisitions sont réalisées séquentiellement en bande X (8-12 GHz).

On suppose que la puissance émise et les performances de la chaîne de réception du radar nous placent en limite de portée à une distance de 40 km pour une résolution de 1m. On réalise l'acquisition de la première image SAR dans les conditions suivantes :

- Longueur d'onde $\lambda_1$ = 3 cm (bande X),
- Distance D = 50 km,
- Gisement $\theta$ = 90°,
- V = 200 m.s$^{-1}$,
- Première durée d'éclairement Te1 = 4,7 s (autrement dit, la résolution est de 1 m),

Usuellement, ce type d'acquisition ne serait pas réalisé puisque l'on se situe au-delà du domaine de portée du radar. D'après l'équation 6, si on fait l'acquisition de la deuxième image avec une résolution radiale 4 fois plus grossière, on augmente la portée du radar d'un facteur $4^{1/3}$. On peut donc réaliser l'acquisition de la deuxième image SAR à une distance de 63 km tout étant dans le domaine de fonctionnement nominal du radar (autrement dit, à la distance D on reste alors à une distance inférieure à la limite de portée du radar).

On réalise la deuxième acquisition suivante.

- Résolution 4 fois plus grossière : Te2 = 1,18 s,
- Longueur d'onde $\lambda_2$ = 3 cm (bande X),
- Tous les paramètres de vol sont égaux à la première acquisition.

Le gain en portée se monte à environ 23 km pour un éclairement supplémentaire d'un peu plus de 1s. L'intérêt opérationnel est donc évident puisqu'il permet de disposer d'une image finale exploitable tout en étant à une distance de la scène supérieure à la limite de portée du radar pour l'acquisition de la première image SAR pour une première résolution prédéterminée.

Deuxième exemple :

Les deux acquisitions sont réalisées simultanément, l'une en bande X (8-12 GHz), l'autre en bande Ku (12-18 GHz). Au vu de l'équation 1 et de l'équation 6,

- en bande Ku, le temps d'éclairement nécessaire pour l'acquisition d'une image avec une même résolution transverse qu'en bande X est plus faible d'un facteur 2/3,
- la portée du radar en bande Ku est inférieure d'un facteur 2/3 à la portée du radar en bande X,
- le rapport signal à bruit est quant à lui inférieur d'un facteur $(3/2)^3 \approx 3,4$.

De plus le phénomène de pertes atmosphériques est plus marqué en bande Ku qu'en bande X.

On se place en bande Ku pour l'acquisition de la première image SAR et en bande X pour l'acquisition de la deuxième image SAR. Tout comme pour l'exemple précédent, on suppose être en limite de portée à une distance de 40km mais avec une résolution de 0, 5m.

On réalise l'acquisition de la première image SAR dans les conditions suivantes :

- Résolution 0,5 m,
- Longueur d'onde $\lambda_1$ = 2 cm (bande Ku),
- Distance D = 50 km,
- Gisement $\theta$ = 90°,
- V = 200 m.s$^{-1}$,
- Temps d'éclairement Te1 = 6,3 s.

On réalise l'acquisition de la deuxième image SAR dans les conditions suivantes :

- Résolution 1 m,
- Longueur d'onde $\lambda_2$ = 3 cm (bande X),
- Distance D = 50 km,
- Gisement $\theta$ = 90°,
- V = 200 m.s-1,
- Temps d'éclairement Te2 = 4,7 s.

Les conclusions sont les mêmes que précédemment, la limite de portée du radar est repoussée et ce, sans temps d'éclairement supplémentaire. Dans cette configuration, il est également envisageable de baisser la puissance émise pour l'acquisition de la deuxième image SAR l2 (du fait des pertes atmosphériques plus importantes en bande Ku qu'en bande X).

## Revendications

1. Procédé d'amélioration d'une image acquise moyen d'au moins un radar à ouverture synthétique **caractérisé en ce qu'**il comprend:

   - une première étape d'acquisition (1) d'une première image SAR d'une scène à imager, au moyen d'un premier radar SAR, avec une première résolution et des premières conditions opérationnelles d'acquisition telles que le fond de la scène à imager ne se distingue pas du bruit thermique sur la première image SAR,
   - une deuxième étape d'acquisition (2), d'une deuxième image SAR de ladite scène à imager, au moyen d'un deuxième radar SAR, dans des deuxièmes conditions opérationnelles d'acquisition sensiblement identiques aux premières conditions opérationnelles d'acquisition et avec une deuxième résolution plus grossière que la première résolution, de façon que le fond de la scène se distingue du bruit thermique sur la deuxième image SAR,
   - une première étape de fusion (4) de la première image SAR et d'une image faisant office de fond de carte et étant alignée avec la deuxième image SAR de façon à obtenir une image hybride.

2. Procédé selon la revendication précédente, comprenant une première étape de recalage (3) de la première image SAR avec la deuxième image SAR.

3. Procédé selon l'une quelconque des revendications précédentes, dans lequel l'image faisant office de fond de carte est la deuxième image SAR.

4. Procédé selon la revendication précédente, comprenant une deuxième étape de recalage (5) d'une image externe distincte d'une image SAR avec l'image hybride et une deuxième étape de fusion (6) de l'image hybride avec l'image externe.

5. Procédé selon la revendication précédente, dans laquelle l'image externe est une image optique ou une carte topographique ou une image infrarouge ou une image optronique.

6. Procédé selon l'une quelconque des revendications 4 à 5, dans lequel la deuxième étape de recalage (5) est une étape de recalage iconique.

7. Procédé selon l'une quelconque des revendications 1 ou 2, dans laquelle l'image faisant office de fond de carte est une image externe distincte d'une image SAR, ledit procédé comprenant, préalablement à la première étape de fusion (4), une troisième étape de recalage (50) de l'image externe avec la deuxième image SAR.

8. Procédé selon la revendication précédente, dans lequel la troisième étape de recalage (50) est une étape de recalage iconique.

9. Procédé selon l'une quelconque des revendications 7 à 8, dans laquelle l'image externe est une image optique ou une carte topographique ou une image infrarouge ou une image optronique.

10. Procédé selon l'une quelconque des revendications précédentes, dans lequel la première étape de recalage (3) est une étape de recalage géométrique.

11. Procédé selon l'une quelconque des revendications précédentes, dans lequel la deuxième image SAR est la somme en amplitude de plusieurs images SAR élémentaires acquises successivement.

12. Procédé selon l'une quelconque des revendications précédentes, dans lequel la première image SAR et la deuxième image SAR sont acquises simultanément.

13. Procédé selon l'une quelconque des revendications 1 à 11, dans lequel la première image SAR et la deuxième image SAR sont acquises successivement.

14. Procédé selon la revendication précédente, dans lequel la première image SAR et la deuxième image SAR sont acquises consécutivement.

15. Procédé selon la revendication 13, dans lequel les acquisitions de la première image SAR et de la deuxième image SAR sont espacées d'un intervalle de temps supérieur à 1 heure.

16. Procédé selon l'une quelconque des revendications précédentes, dans lequel le deuxième radar est le premier radar.

17. Procédé selon l'une quelconque des revendications précédentes, dans lequel la première image SAR et la deuxième image SAR sont acquises par émission autour d'une première fréquence centrale d'émission et, respectivement, autour d'une deuxième fréquence centrale d'émission identique à la première fréquence centrale d'émission.

18. Procédé selon la revendication 17, dans lequel la première fréquence centrale d'émission est comprise dans la bande X.

19. Procédé selon l'une quelconque des revendications 1 à 16 dans lequel la première image SAR et la deuxième image SAR sont acquises par émission autour de deux fréquences centrales d'émission différentes.

20. Procédé selon la revendication précédente, dans lequel la première image SAR est acquise au moyen d'une onde radar présentant une première fréquence centrale d'émission comprise dans la bande Ku et la deuxième image SAR est acquise au moyen d'une onde radar présentant une deuxième fréquence centrale d'émission comprise dans la bande X.


**Patentansprüche**

1. Verfahren zum Verbessern eines Bildes, das mittels wenigstens eines Radars mit synthetischer Apertur aufgenommen wurde, **dadurch gekennzeichnet, dass** es Folgendes beinhaltet:

   - einen ersten Schritt (1) des Erfassens eines ersten SAR-Bildes einer abzubildenden Szene mittels erstes SAR-Radars mit einer ersten Auflösung und unter ersten Erfassungsbetriebsbedingungen, so dass sich der Hintergrund der abzubildenden Szene nicht von thermischem Rauschen auf dem ersten SAR-Bild unterscheidet;
   - einen zweiten Schritt (2) des Erfassens eines zweiten SAR-Bildes der abzubildenden Szene mittels eines zweiten SAR-Radars unter zweiten Erfassungsbetriebsbedingungen, die mit den ersten Erfassungsbetriebsbedingungen im Wesentlichen identisch sind, und mit einer zweiten Auflösung, die gröber ist als die erste Auflösung, so dass sich der Hintergrund der Szene von dem thermischem Rauschen auf dem zweiten SAR-Bild unterscheidet;
   - einen ersten Schritt (4) des Zusammenführens des ersten SAR-Bildes und eines Bildes, das als Kartenhintergrund dient und mit dem zweiten SAR-Bild fluchtet, um ein Hybridbild zu erhalten.

2. Verfahren nach dem vorherigen Anspruch, das einen ersten Schritt (3) des Neueinstellens des ersten SAR-Bildes mit dem zweiten SAR-Bild beinhaltet.

3. Verfahren nach einem der vorherigen Ansprüche, wobei das als Kartenhintergrund dienende Bild das zweite SAR-Bild ist.

4. Verfahren nach einem vorherigen Anspruch, das einen zweiten Schritt (5) des Neueinstellens eines getrennten externen Bildes eines SAR-Bildes mit dem Hybridbild und einen zweiten Schritt (6) des Zusammenführens des Hybridbildes mit dem externen Bild beinhaltet.

5. Verfahren nach dem vorherigen Anspruch, wobei das externe Bild ein optisches Bild oder eine topografische Karte oder ein Infrarotbild oder ein optronisches Bild ist.

6. Verfahren nach einem der Ansprüche 4 bis 5, wobei der zweite Neueinstellungsschritt (5) ein ikonischer Neueinstellungsschritt ist.

7. Verfahren nach Anspruch 1 oder 2, wobei das als Kartenhintergrund dienende Bild ein getrenntes externes Bild eines SAR-Bildes ist, wobei das Verfahren vor dem ersten Zusammenführungsschritt (4) einen dritten Schritt (50) des Neueinstellens des externen Bildes mit dem zweiten SAR-Bild beinhaltet.

8. Verfahren nach dem vorherigen Anspruch, wobei der dritte Neueinstellungsschritt (50) ein ikonischer Neueinstellungsschritt ist.

9. Verfahren nach einem der Ansprüche 7 bis 8, wobei das externe Bild ein optisches Bild oder eine topografische Karte oder ein Infrarotbild oder ein optronisches Bild ist.

10. Verfahren nach einem der vorherigen Ansprüche, wobei der erste Neueinstellungsschritt (3) ein geometrischer Neueinstellungsschritt ist.

11. Verfahren nach einem der vorherigen Ansprüche, wobei das zweite SAR-Bild die Amplitudensumme von mehreren aufeinander folgend erfassten elementaren SAR-Bildern ist.

12. Verfahren nach einem der vorherigen Ansprüche, wobei das erste SAR-Bild und das zweite SAR-Bild gleichzeitig erfasst werden.

13. Verfahren nach einem der Ansprüche 1 bis 11, wobei das erste SAR-Bild und das zweite SAR-Bild aufeinander folgend erfasst werden.

14. Verfahren nach dem vorherigen Anspruch, wobei das erste SAR-Bild und das zweite SAR-Bild konsekutiv erfasst werden.

15. Verfahren nach Anspruch 13, wobei die Erfassungen des ersten SAR-Bildes und des zweiten SAR-Bildes um eine Zeitperiode von mehr als 1 Stunde getrennt sind.

16. Verfahren nach einem der vorherigen Ansprüche, wobei das zweite Radar das erste Radar ist.

17. Verfahren nach einem der vorherigen Ansprüche, wobei das erste SAR-Bild und das zweite SAR-Bild durch Senden um eine erste Mittensendefrequenz bzw. um eine zweite Mittensendefrequenz erfasst werden, die mit der ersten Mittensendefrequenz identisch ist.

18. Verfahren nach Anspruch 17, wobei die erste Mittensendefrequenz im X-Band liegt.

19. Verfahren nach einem der Ansprüche 1 bis 16, wobei das erste SAR-Bild und das zweite SAR-Bild durch Senden um zwei unterschiedliche Mittensendefrequenzen erfasst werden.

20. Verfahren nach dem vorherigen Anspruch, wobei das erste SAR-Bild mittels einer Radarwelle mit einer ersten Mittensendefrequenz im Ku-Band erfasst wird und das zweite SAR-Bild mittels einer Radarwelle mit einer zweiten Mittensendefrequenz im X-Band erfasst wird.

**Claims**

1. A method for enhancing an image acquired by means of at least one synthetic aperture radar, **characterised in that** it comprises:

   - a first step (1) of acquiring a first SAR image of a scene to be imaged by means of a first SAR radar, with a first resolution and first operational acquisition conditions such that the background of the scene to be imaged does not stand out from the thermal noise on the first SAR image;
   - a second step (2) of acquiring a second SAR image of said scene to be imaged by means of a second SAR radar, in second operational acquisition conditions substantially identical to said first operational acquisition conditions and with a second resolution that is coarser than the first resolution, so that the background of the scene stands out from the thermal noise on the second SAR image;
   - a first step (4) of merging said first SAR image and an image serving as a map background and being aligned with said second SAR image so as to obtain a hybrid image.

2. The method according to the preceding claim, comprising a first step (3) of adjusting said first SAR image with said second SAR image.

3. The method according to any one of the preceding claims, wherein the image serving as a map background is said second SAR image.

4. The method according to the preceding claim, comprising a second step (5) of adjusting a distinct external image of an SAR image with said hybrid image and a second step (6) of merging said hybrid image with said external image.

5. The method according to the preceding claim, wherein said external image is an optical image or a topographical map or an infrared image or an optronic image.

6. The method according to any one of claims 4 to 5, wherein said second adjustment step (5) is an iconic adjustment step.

7. The method according to claim 1 or 2, wherein said image serving as a map background is a distinct external image of an SAR image, said method comprising, prior to said first merging step (4), a third step (50) of adjusting said external image with said second SAR image.

8. The method according to the preceding claim, wherein said third adjustment step (50) is an iconic adjustment step.

9. The method according to any one of claims 7 to 8, wherein said external image is an optical image or a topographical map or an infrared image or an optronic image.

10. The method according to any one of the preceding claims, wherein said first adjustment step (3) is a geometric adjustment step.

11. The method according to any one of the preceding claims, wherein said second SAR image is the amplitude total of a plurality of successively acquired elementary SAR images.

12. The method according to any one of the preceding claims, wherein said first SAR image and said second SAR image are acquired simultaneously.

13. The method according to any one of claims 1 to 11, wherein said first SAR image and said second SAR image are acquired successively.

14. The method according to the preceding claim, wherein said first SAR image and said second SAR image are acquired consecutively.

15. The method according to claim 13, wherein the acquisitions of said first SAR image and of said second SAR image are separated by a time interval of more than 1 hour.

16. The method according to any one of the preceding claims, wherein said second radar is said first radar.

17. The method according to any one of the preceding claims, wherein said first SAR image and said second SAR image are acquired by transmitting around a first central transmission frequency and, respectively, around a second central transmission frequency identical to the first central transmission frequency.

18. The method according to claim 17, wherein said first central transmission frequency is within the X band.

19. The method according to any one of claims 1 to 16, wherein said first SAR image and said second SAR image are acquired by transmitting around two different central transmission frequencies.

20. The method according to the preceding claim, wherein said first SAR image is acquired by means of a radar wave having a first central transmission frequency within the Ku band and said second SAR image is acquired by means of a radar wave having a second central transmission frequency within the X band.

FIG.1

FIG.2a

FIG.2b

```
        1                              2
┌─────────────────┐          ┌─────────────────┐
│   Acquisition   │          │   Acquisition   │
│ première image  │          │ deuxième image  │
│     SAR I1      │          │     SAR I2      │
└────────┬────────┘          └────────┬────────┘
         │                            │
         │ I1                         │ I2
         │                            │
         │    ┌─────────────────┐     │
         └───▶│   Recalage de   │◀────┘
              │    I1 avec I2   │
       3      └────────┬────────┘
                       │
                       ▼
              ┌─────────────────┐
              │     Fusion      │
              │  de I1 avec I2  │
       4      └────────┬────────┘
                       │ IH
                       ▼
              ┌─────────────────┐
              │   Recalage de   │◀──── Iext
              │  Iext avec IH   │
       5      └────────┬────────┘
                       │
                       ▼
              ┌─────────────────┐
              │     Fusion      │
              │ de Iext avec IH │
       6      └────────┬────────┘
                       │
                       ▼
                      IF
```

# FIG.3

1

| Acquisition
première image
SAR I1 |

2

| Acquisition
deuxième image
SAR I2 |

I1

I2

| Recalage de
I1 avec I2 |

3

| Recalage de
Iext avec I2 |

— Iext

50

| Fusion de
I1 avec Iext |

40

IH

# FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ZHAO JIAN-HONG et al.** Impact of signal bandwith on airborne wideband radar echoes. *Microwave and millimeter wave technology,* 2008